# EUROPEAN PATENT SPECIFICATION

(11) **EP 0 766 106 B1**
(45) Date of publication and mention of the grant of the patent: **24.11.2004**
(21) Application number: 96850162.7
(22) Date of filing: 27.09.1996
(51) Int. Cl.: G02B 6/245

(54) **Stripper for fiber ribbon**
Abisoliervorrichtung für Faserbändchen
Dispositif à dénuder pour ruban de fibres

(30) Priority: 27.09.1995 SE 9503338
(43) Date of publication of application: 02.04.1997
(73) Proprietor: Telefonaktiebolaget LM Ericsson (publ), 164 83 Stockholm (SE)
(72) Inventor: Ström, Joakim, 129 40 Hägersten (SE)
(74) Representative: Larfeldt, Helene

(56) References cited:
- US-A- 4 870 878
- US-A- 5 269 206
- PATENT ABSTRACTS OF JAPAN vol. 003, no. 111 (E-138), 17 September 1979 & JP 54 088137 A (TOSHIBA CORP), 13 July 1979,

## Description

### TECHNICAL FIELD

The invention relates to a method and a tool for stripping a cable, in particular optical fibers joined to each other to form a fiber ribbon.

### STATE OF THE ART

A fiber ribbon comprises several optical fibers, which are located adjacent to each other and are isolated from each other and from the environment, but in some manner are fixed in parallel to each other, for example by means of a polymer jacket or sleeve. The number of fibers that are located in parallel is of course optional, but commercially in for instance Sweden fiber ribbons having four parallel fibers, 4-fiber ribbons, are used, while in the U.S. 12-fiber ribbons are used. Also 6- and 8-fiber ribbons are today commercially available.

In splicing two different fibers, which usually is performed by fusioning or welding, the primary protective coating must first be removed, that is both the individual protective coating of the fibers and the material, which keeps the fibers together as one unit, a fiber ribbon. Thereupon the uncovered fibers are cut in order to then be welded to each other.

In order to strip the primary protective coating, the entire fiber ribbon is first heated, see for example the fiber tool, which is described in Swedish patent application 9103492-6, filed November 11, 1991. This is performed to make the primary coating of the fiber ribbon softer, which in turn leads to reduction of friction forces appearing in connection with the stripping operation. Thereafter the primary protective coating is removed by means of two blades having opposed edges, which pinch the long sides of the fiber ribbon about 35 - 50 mm from the end thereof, which is the length that usually must be removed. Then one pulls the fiber ribbon with two possible outcomes:
1. The primary protective coating is pulled away in the shape of a long thin plastic tube.
2. The primary protective coating is scraped away as small particles.

The first of these two cases is the desirable one, because when the second case occurs the result will be many small particles which pollute the stripping tool and work area so that they require cleaning. Furthermore, the stripped fiber ends also become dirty, and then they too must be cleansed. Further, if the fiber ribbon in connection with the heating is made too soft, i.e. too much heat is supplied, the result will be that the fiber ribbon is easily deformed and that the primary protective coating is torn to pieces, which is also an undesirable result.

It is not very difficult to strip a fiber ribbon having relatively few fibers joined to each other, for example the 4-fiber ribbons commonly used in Sweden. This is due to the fact that a relatively small force is required for removing the primary protective coating from the optical fibers in the shape of a long thin tube. Tools for accomplishing this are thus commercially available today, for example "ECC4", manufactured by the company Ericsson Cables AB.

Another stripping tool for optical fibers is described in the U.S. patent US-A 4,188,841 which discloses a stripping tool for a single optical fiber. The tool may comprise a number of serially arranged pairs of blades, which are fixed in relation to each other, having the purpose of avoiding a repeated stripping process when stripping long coatings of an optical fiber.

The German published patent application DE-A1 40 38 414 relates to stripper apparatus for optical fibers, in which two blade systems are included, by means of which an outer coating and both an outer and inner coating respectively are penetrated in the stripping operation. In this manner a stripped fiber end is obtained, where the inner coating sticks out outside the outer coating.

U.S. patent US-A 5,269,206 discloses a stripping tool for cables which is suitable for stripping the coating of ribbon cables in unbroken pieces.

Japanese published patent application JP 54 088 137 discloses a stripping tool which comprises several pairs of blades arranged at different locations along the length of the section to be stripped off, wherein the distance between the pairs of blades along the length of the cable remains fixed during the stripping process. Apparently, this tool has the purpose of avoiding a repeated stripping process when stripping long sections of coating of a cable.

When stripping fiber ribbons having a larger number of fibers, for example 12-fiber ribbons, presently used in the U.S.A., it is not equally simple to pull off the primary coating in the shape of an unbroken tube piece. This is due to the fact that the primary protective coating must be removed using a much larger force than that required for a 4-fiber ribbon. The result, when a tool similar to ECC4 is used, is often that the primary coating is torn to pieces.

Another problem which can occur, is that the remaining plastics matrix of the ribbon fiber is deformed, so that the stripped fibers begin to point in different directions obstructing the subsequent cutting and welding to a significant extent. In order to avoid these problems the fiber ribbon can be stripped in several stages of about 8 - 10 mm at a time. This results in that the force is required for removing the primary protective coating becomes smaller and in that it hence can be removed in the shape of short tube pieces. However, the work of performing this becomes cumbersome, since the length to be stripped usually is between 35 and 50 mm.

### SUMMARY OF THE INVENTION

It is an object of the invention to provide a method and a device by means of which a cable, in particular optical fiber cables arranged to form a fiber ribbon, can be stripped without causing the above mentioned problems of for example dirtying, and without requiring that the cable must be stripped several times or in several operations in order to achieve a sufficiently long stripped region.

This is obtained by serially connecting a number of two-pieced segments, comprising a topside or upper side having a blade and a bottom or lower side having an opposed blade, so that they can be displaced in relation to each other like in an accordion. This allows a stripping of a large number of short pieces of the primary coating, in one single operation, without risking that the jacket or primary coating will be scraped.

Hence, a general method of stripping a cable is provided, in particular an optical fiber cable and in particular optical fiber cables joined to a fiber ribbon. Cables comprise conventionally an inner longitudinal core and at least one protective or isolating jacket, enclosing the core. The protective jacket is stripped automatically in a number of stages beginning at the end of the cable to be stripped, so that the stripped coating is removed in the shape of unbroken, short tube pieces. The entire stripping is then carried out in one single operation, by first bringing the blade edges against the cable at at least two locations at a distance from each other in the longitudinal direction of the cable and at a distance from the end thereof. Thereupon a force is applied to the edges in the longitudinal direction of the cable, towards its end, so that the force first acts on edges closest to or located directly at the cable end and displaces a first piece of the protective jacket a distance towards the end of the cable. Thereafter the force will also act on the next closest or proximate edges for displacing the piece of protective jacket located between the edges in a direction towards the end of the cable. At the same time the first edges continue to displace the first piece of the protective jacket further away from the original position thereof, in a direction towards the end of the cable.

A tool for removing cable coatings, in particular optical fiber cables and in particular optical fiber cables joined to form fiber ribbons, has at least two pairs of blades with transverse edges, which can pinch the cable and cut into the protective jacket in order to form cuts or notches perpendicular to the longitudinal direction of the cable. These blade pairs are located on different segments, which are moveable or displaceable in relation to each other. The tool also has a retaining means for retaining the end of the cable, so that it does not move when the cable is stripped. The retaining means may comprise a standard fiber retainer, which in a suitable manner can be fixed to the tool.

Furthermore, the segments of the tool are suitably moveably mounted at shafts, which permit the segments to move only in relation to each other in a direction essentially in the longitudinal direction of the cable. Moreover, these segments are advantageously provided with means in the shape of hooks or abutments, which form a stop for a too long displacement of a segment pair from an adjacent segment pair.

Furthermore, the tool can comprise electrical coils, which then are preferably mounted in the segments, for heating a cable to be stripped by means of the tool. The heat provided from these coils can then be controlled automatically to any predetermined temperature based on the output signal from one or several temperature sensing means such as suitable transducers.

The tool may also comprise a stop, which prevents that all subsections of the stripped protective jacket can be entirely removed from the end of the cable. In other words the subsegments are prevented by the stop among other things, from moving more than predetermined distances from their initial positions. The stop acts advantageously on the outermost segment pair located at the outermost end of the cable.

On the segment pairs advantageously also both male and female parts are arranged which are intended to come into engagement with each other in order to lock the segments of one pair to each other, so that they can be moved as one unit in a direction parallel to the axes of the tool and thus in parallel to the longitudinal direction of a cable correctly placed in the tool. Furthermore, a recess may be located in the middle portion of the segments and it may then have side surfaces arranged to contact the outer surface of a cable placed in the tool in order to achieve a lateral alignment of the cable. The tool further advantageously comprises a large top or upper part, at which the outermost upper segment is mounted, this top part overlapping all the segments in order to provide a means suited to be gripped by an operator whereby these means can be pulled away from the other parts of the tool providing the stripping movement of the cutting blades.

In a practical embodiment the tool comprises a main body in the shape of a suitable metal block having a side surface. A linear bearing extends or projects from this side surface, for example in the shape of two straight parallel circular-cylindrical shafts. At least two segments carry blades, which in a stripping operation are applied to the surface of the protective jacket of a cable and thereby penetrates into the jacket. The segments are individually moveable along the shafts but having a limited mobility in relation to each other. On the main body suitably means are provided for retaining the cable. A stop or abutment is attached to the linear bearing at the outer end thereof. In an outermost segment, which is arranged farthest away from the main body a hook or engagement means is mounted, which is arranged to engage at least one other segment in such a manner that this engagement is obtained only when the segment, at which the means is mounted, has been displaced a predetermined distance from such other segment. These distances are different for the segments and the more proximate to said body the other segments are located the longer they are.

### BRIEF DESCRIPTION OF THE DRAWINGS

The invention will now be described by way of an non-limiting exemplary embodiment with reference to the accompanying drawings, in which
- Fig. 1 is a perspective view showing the structure of a ribbon fiber,
- Figs. 2a - 2e are schematic side views showing different steps of a method of stripping a ribbon fiber,
- Figs. 3a and 3b are schematic views showing how different subsections of a stripping mechanism can be joined to each other, and
- Fig. 4 is a perspective view showing apparatus for stripping a fiber ribbon.

### DETAILED DESCRIPTION

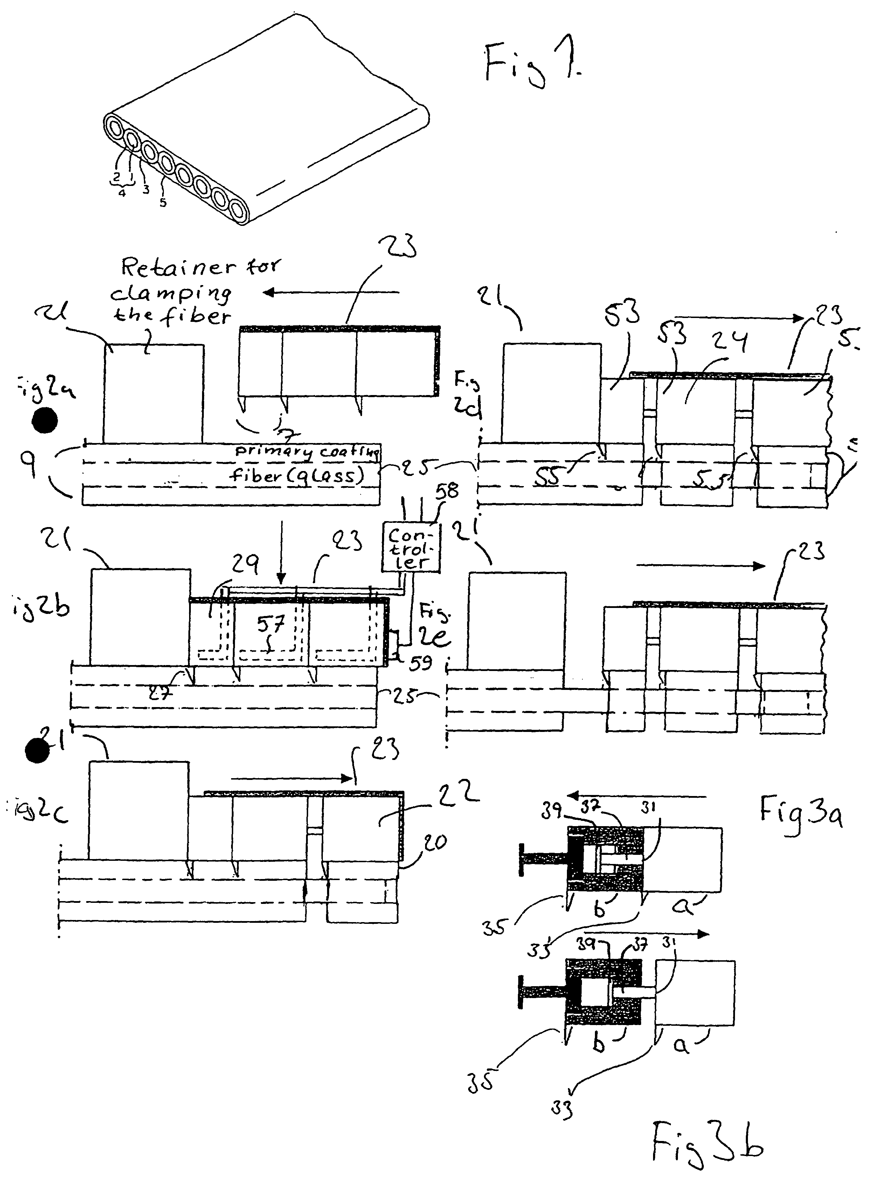

In Fig. 1 the structure of a fiber ribbon 5 is shown in principle. The fiber ribbon 5 comprises a number of individual, parallel, optical fibers 1. Each of these individual fibers is covered with a protective coating 2 of a suitable material, for example a polymer material. A number of such fibers, i.e. optical fibers 1 covered with a coating and in such a manner forming an optical cable 4, are then joined to each other by means of a common protective jacket 3 to form the fiber ribbon 5.

In various applications, e.g. in splicing a fiber ribbon to another ribbon cable or individual optical fibers, it is necessary to uncover or expose the very optical fibers. Thus, the different jackets or coatings 2 and 3 of polymer materials, jointly denoted the primary protective coating or primary coating, must be removed. This is performed in a number of different stages but in one single operation by means of a tool, which is schematically shown in Figs. 2a - 2e and in Figs. 3a - 3b, which show a detail used in the device illustrated in Figs. 2a - 2e.

The illustrated tool is constructed of a number of pairs of segment 23, only the upper segments of which being shown in the figures and which each one is designed to have the same function as a conventional stripping tool. Thus each pair of segments 23 has a pair of blades 7 comprising opposing edges, which extend in the transverse direction in relation to the longitudinal direction of the fiber ribbon and which can pinch it from both the upper and lower sides and then cut into the primary coating 9 both from the top side as shown in Fig. 2b and from the bottom side. These segments 23 are mechanically interconnected in a suitable manner, so that the segments are displaceable in relation to each other, at least in a direction perpendicular to a plane through the blade edges.

The mechanical interconnection of neighbouring segments can be made in different ways. For example, the segments can be interconnected by flexible unstretchable elements having definite lengths, such as band-shaped members made for example of a suitable metal strip. This member can also carry electrical conductors for supplying heating power to the segments. Another possible interconnection is shown in Figs. 3a - 3b. The interconnection device comprises in this case a bar 37 attached to a segment a, so that the longitudinal direction of the bar is essentially perpendicular to the edge of the blade 33 of the segment a. A segment b has a hole, which extends essentially perpendicularly to the edge of the knife 35 of this segment b and the diameter of which is adjusted to receive the bar 37 in the segment a. Hence, the bar 37 passes into the hole of the segment b, whereby the segments a and b become displaceable in relation to each other in a direction essentially perpendicular to the edges of their respective blades 33 and 35.

In order to make it impossible to separate the segments a and b more than a predetermined length, a stop is provided. In the embodiment shown in Figs. 3a - 3b it is provided by giving the hole formed in segment b a larger diameter at some distance into the segment b and by providing the bar 37 with a head 39 located at the end of the head and having a diameter larger than the rest of the bar, so that the head 39 cannot pass through the hole in the area, where the diameter of the hole is smaller.

In this manner two segments are provided, which are displaceable in relation to each other in a direction, which is essentially perpendicular to the planes, in which the two blades of the segments are located, and hence perpendicular to the edges of the blades. Further, the segments are so interconnected, that they cannot be pulled apart. Depending on how long sections, which are to be stripped, and on how long parts, that without any risk can be stripped in the shape of a tube, a suitable number of segments having suitable dimensions are interconnected in this manner. In the case where the fiber ribbon to be stripped is a 12-fiber ribbon a suitable length of each segment is about 8 - 12 mm, which means that in order to strip a piece having a length of 48 mm some five segments 23 that are serially connected in the manner described above are required.

The method for performing a stripping operation by means of such apparatus is schematically illustrated in Figs. 2a - 2e. In these figures only the method applied to the top side of the fiber ribbon is shown, but the same procedure also takes place on the bottom side of the fiber ribbon, since the tool is symmetrical in its function. Furthermore, the schematic Figs. 2a - 2e only show three interconnected segments, but of course more segments may be provided as will be discussed hereinafter.

First the fiber end 25 to be stripped is attached at a suitable distance of its end surface, for example 35 - 50 mm from the end surface, by means of a retainer means 21, see Fig. 2a, which clamps the fiber ribbon and thus holds it firmly. This means 21, which clamps the fiber ribbon 25, is preferably integrated with the stripping tool itself, but can also be an individual part, separate therefrom. Thereafter the stripping tool together with its segments 23 is positioned so that the edge of the blade 27 on the innermost segment 29 begins to pinch the point on the fiber ribbon 25, from which a stripping is desired, see Fig. 2b. When the segments 23 in this manner pinches the fiber ribbon, so that all of their blades have penetrated into the primary coating 9 of the fiber ribbon 25, a force is applied to the outermost segment 22 in a direction away from the retainer means 21, this force being perpendicular to the planes in which the blades are located and thus being parallel to the longitudinal direction of the fibers, see 2c. This results in that the primary coating 9 closest or most proximate to the end of the fiber ribbon will be stripped as an unbroken tube 20.

If one then continues to apply the force, the stop for the mutual movement of the segments 23 will assure that a force in the longitudinal direction of the fiber ribbon will be applied also to the second first or second outermost segment 24, what in turn results in that the second outermost piece of the primary coating 9 will be displaced and stripped as a tube, see Fig. 2d. This continues until a force in the longitudinal direction of the fiber ribbon will be applied to the innermost segment 29 and until the last portion of the primary protective coating 9 to be stripped is stripped in the shape of a thin tube, see Fig. 2e.

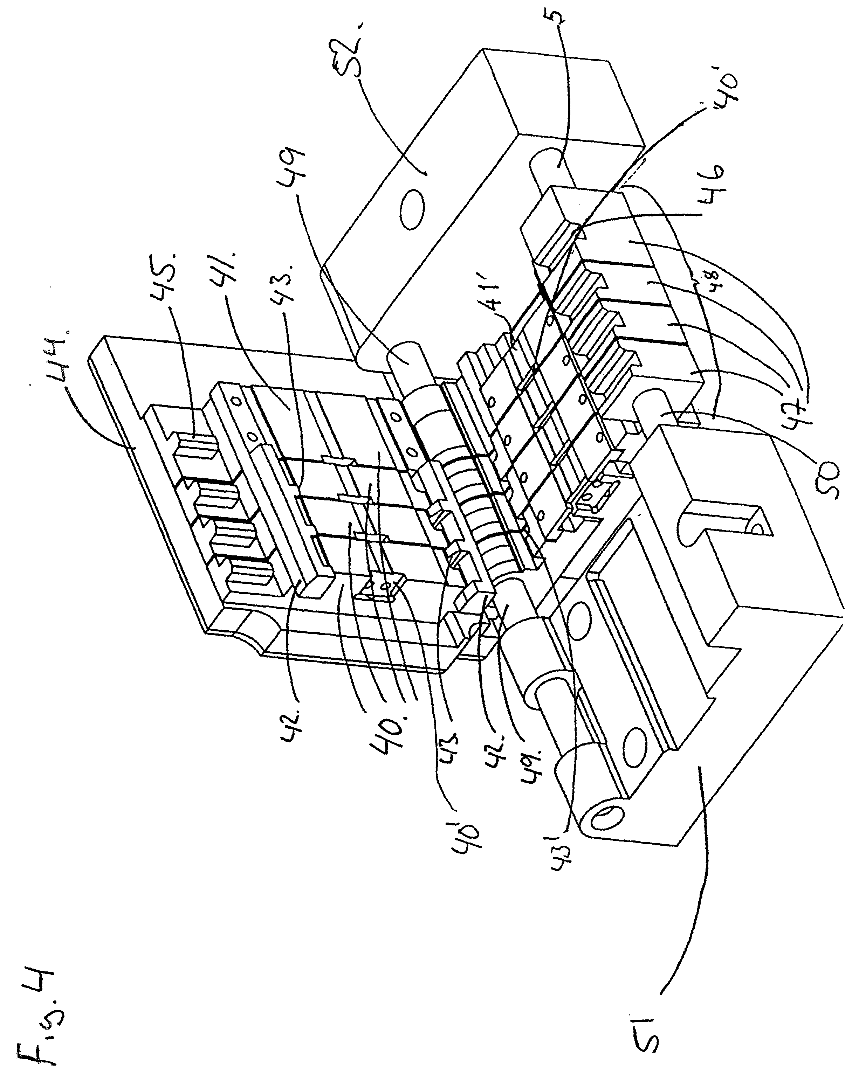

Fig. 4 shows a complete stripping tool constructed according to the principles described with reference to Figs. 1 - 3b. Thus, the tool shown in Fig. 4 has the same functional elements as the tool described with reference to Figs. 2a - 2e, but in some regards has a different design.

Thus, the upper segments 40 shown in Fig. 4 correspond to the segments 23 shown in Figs. 2a - 2e and the outermost upper segment 22 in Fig. 2c corresponds to the segment 41 in Fig. 4. Furthermore, in Fig. 4 the bottom part of the stripping tool is shown, and this bottom part comprises lower segments 47 opposed to the segments 40 of the upper part. Each of these upper and lower segments 40, 47 are like the segments 23 provided with a blade, which is not shown in the figure but is intended to be mounted in recesses 40' at the side of the segments by means of screws. The sequential stripping by means of the tool in Fig. 4 is obtained by means of hooking means 42, which are attached to the outermost upper segment 41 and which also retain the other upper segments and provides an alignment of the outermost segment 41, which is rigidly attached to the upper part 44 designed as lid that can be swung upwards, and the other upper segments 40 in the rotational direction. This is obtained by the fact that the two hooking means 42 are attached to opposite edges of the underside of the outermost segment 41. Further, they extend from this segment in a direction parallel to a fiber ribbon placed in the tool. Thereby they prevent that the remaining pivoted upper segments 40 will fall down when the lid part 44 of the tool is swung up around a shaft at the rear side of the tool.

These hooking means 42 comprise a generally elongated main part located in the longitudinal direction of an inserted fiber ribbon and a number of pins or protrusions 43 projecting in a transverse direction therefrom and shaped as low ridges or projections on the hooking means 42. A front hooking means is located at the front side of the lid part 44 and carries or supports the front side marginal portions of the upper remaining segments that are moveable in relation to the lid part 44. It is there intended to come into engagement with all of the upper and lower segments except the outermost one, by means of the projections 43. A rear hooking means is located at that side of the lid part 44, which is located next to a shaft 49 about which the lid part 44 is rotable to perform the swining movement. The rear hooking means can there by means of the projections 43 come into engagement with the non-outermost upper and lower segments.

Furthermore, the projecting ridges 43 of the hooking means 42 are so located that they are displaced in relation to the engagement side of recesses 43'. These recesses 43' thus correspond to the projections 43 and are located in the side surfaces of all but the outermost segments. The recesses 43' have a substantially larger extension than the projectios 43 in a direction parallel to the longitudinal direction of a fiber ribbon placed in the tool and provided with suitably located engagement surfaces. These engagement surfaces will come in contact with the projections 43 serially, so that the second outermost segments do not become affected, until the outermost segments 41 and 46 have been displaced a predetermined distance, for example 10 mm, from their initial position, and so that the subsequent segments will not become affected, until the neighbouring preceding pair of segments has been moved a predetermined distance from its initial position, etc. Similar recesses are arranged in the front side of the non-outermost segments for cooperation with the ridges 43 on the front hooking means.

The first, outermost segment 41 is together with the two hooking means 42 rigidly attached to the lid or upper part 44 of the tool. The segments 40 in the upper part 44 of the tool are further configured as elongated bodies, which are located in the tool so that their longitudinal directions are perpendicular to the longitudinal direction of a fiber ribbon placed in the tool. Shallow recesses or grooves 41' are arranged in the middle of the segments 40, 41 and they have side surfaces that are suitably located for retaining a fiber ribbon to be stripped in a proper position in a lateral direction, i.e. maintaining the fiber ribbon in an essentially straight state. At the ends of the segments, i.e. at the short sides or side surfaces thereof, the recesses 43' are provided whereas the long side surfaces of the segments face each other or are directed in the longitudinal direction of the fiber ribbon. Each of the upper segments 40 is also provided with a male parts 45 located at the front side of the respective segment 40. The male parts project downwards, in a direction down from the under side of the lid part 44. When the upper part 44 of the tool is in its swung-down position, the male parts engage with corresponding female parts 46 located at the front transverse ends of the lower segments 47. In this position the segments of each pair will then be locked to each other at the front side. The lower segments form a part 48 of the bottom or lower part of the tool.

In the rear end of the upper segments 40, i.e. at the end which does not comprise the male parts, longitudinal through-holes are arranged. Corresponding or complementary longitudinal through-holes are arranged in the corresponding rear end of the lower segments 47. Also the female parts at the front edge of the lower segments 47 have longitudinal through-holes. All these through-holes are thus parallel to each other and extend in the direction of a cable placed in the tool.

The top part 44 of the tool consists of a plate-shaped body, at which hence a number of segments 40 are located which are elongated in the transverse direction and which are displaceable in relation to each other along the shaft 49. The rear shaft 49 extends through the through-holes of the upper and lower segments 40 and 47 at the rear ends of the segments, which do not comprise male and female parts respectively. Further, the top part comprises the hooking means 42 at the two sides of the top part 44, which are rigidly attached to the outermost upper segment 41. These hooking means 42 are so located that they also prevent the upper segments 40, which are not rigidly attached to the upper part 44 of the tool, i.e. all segments 40 except the outermost segment 41, from coming out of alignment with the segment 41 in the direction of rotation along the shaft 49. The lid part 44 further comprises the male parts 45 projecting at the front of each segment 40 in a direction downwards from the upper part 44. The upper part 44 and all segments 40, including the outermost segment 41 that is rigidly attached to the upper part 44 are furthermore rotatable as one unit about said shaft 49 that is located at the rear side of the tool. Furthermore, the upper part 44 together with the parts attached thereto is displaceable along the shaft 49.

The lower segments 47 in the bottom or lower part 48 of the tool are, except that they lack hooking means 42 and that they are equipped with the female parts 46 instead of male parts 45, essentially the same as, or complementary to the segments 40 of the upper part 44, but opposed. Furthermore, the lower segments 47 are displaceable along the rear shaft 49 and also along a front shaft 50, which is parallel to the rear shaft 49 and passes through the respective through-holes at the front end or front side of the lower segments.

The segments 40 and 47 at the upper and lower parts respectively of the tool are thus interconnected along the rear shaft 49 and are moveable along this common shaft 49. Furthermore, the segments 47 are also attached to, but moveable along, the second shaft 50 located at the front edge of the tool. The tool also comprises a retainer part for a fiber ribbon placed therein, which has a lower part 51, the lid or upper part of which not being shown. The lower part 51 is designed as an approximately rectangular block having a recess on its upper surface, which is intended, for example, for a standard detachable retainer for a fiber ribbon, which is conventionally used both for stripping, cutting and welding. The recess does not extend all the way up to the side surface of the lower part 51, which faces the segments, in order that a retainer placed therein should have an abutment next to this side surface. From this side surface of the lower part 51 of the retainer part extends in a perpendicular direction the rear shaft 49, along which the upper segments 40 of the tools run, and also the front shaft 50, so that the lower segments 47 of the tool can slide along the shafts 49 and 50. The rear shaft 50 is rigidly attached to the rear portion of the lower part 51 of the retainer part in two upstanding projecting parts thereof, so that a part of the shaft is exposed there inbetween in order that a lid part, not shown, can be attached thereto for a swinging movement about the shaft and to be swung down for holding a fiber retainer.

The tool works in the following way. First the tool is placed in an initial position, by moving all segments as far as possible in a direction towards the retaining part with its lower part 51, until the innermost segments come into contact therewith.

All segments are now in close contact with each other. This movement can be performed with a swung-down lid part 44 by means of pulling it manually in said direction. The upper part 44 together with its connected parts is then swung up. A fiber ribbon, which is to be stripped, is fixed in the retainer and its lower part 51, so that the innermost part of its end, which is desired to be stripped, is located in the plane of the blade pair of the innermost segments. Then the upper part 44 of the tool, which is rotatable about the rear shaft 49, is again swung down, so that the male parts 45 of the upper segments 40 come into engagement with the female parts 46 of the segments 47 of the lower part 48. An upper segment and an opposite lower segment will then form a locked pair of segments that can move as unit. The locking function is provided by the complementary male and female parts at the front side and by the complementary through-holes for the shaft 49 at the rear side. The blades of the upper and lower segments 40 and 47 will then be located exactly above each other and will with their edges cut into the primary coating of the fiber ribbon. Thereafter a force is applied to the upper part 44 in the longitudinal direction of the fiber ribbon and in a direction away from the lower part 51 of the retainer part, along the shafts 49 and 50. For applying the force, an operator can grip with his one hand the upper part 44 and hold firmly the closed retainer part with his other hand.

This force results in that the outermost segments, i.e. the upper outermost segment 41 and the corresponding segment 47 of the lower part of the tool, are pulled away from the lower part 51 of the retainer, to the right in Fig. 4, resulting in that a first part of the primary coating is stripped from the fiber ribbon. The remaining segments which now are connected to form locked pairs, still have their positions next to the lower part 51 of the retainer. If one then continues to apply the force, the subsequent parts of the primary protective coating will successively, by means of the projecting ridges 43 that are displaceable in relation to the sides of the segments on the hooking means 42 that are attached to the outermost upper segment, start to be pulled away from the retainer 51. Finally all segments 40 and 47 will be moving in a direction away from the lower part 51 of the retainer, which holds the fiber ribbon. Thereby the primary coating, which from the beginning was located between the outer end of the fiber ribbon and the blades of the innermost segment pair, will be stripped.

If the movement is continued long enough, all the parts of the primary coating stripped as short tubes will be entirely removed from the stripped end of the fiber ribbon, which in some cases is desirable. In other cases, such as in a subsequent cutting of the fibers, it can be desirable to keep one or more short tube pieces of the primary protective coating at the outermost end of the stripped fiber ribbon end, so that the individual fibers of the fiber ribbon are still joined to each other. This also results in that the risk that the operator, who carries out the cutting, will injure himself on the fiber remains will be minimized. The stopping function can in the general case be provided by interconnecting the innermost movable segment and the stationary or fixed fiber retainer part in basically the same way as the segments are connected to each other.

The tool in Fig. 4 can for the stopping function be equipped with a stop 52 in the shape of an essentially rectangular plate, which can be attached to the ends of the parallel linear shafts 49 and 50 at a suitable distance from the lower part 51 of the retainer, so that the segments 40 and 47 are moveable along the shafts 49 and 50 only between the retainer part and the stop 52. Because the stop 52 limits the movement of the segments along the shafts, a suitable location thereof can prevent the innermost stripped short pieces of the primary protective coating from being entirely removed from the fiber ribbon. The movement to the right in the figure is hence prevented to continue, when the side surfaces of the outermost segments 41 and 46 come into contact with the opposing surface of the stop 52. Furthermore, the stop 52 is advantageously also displaceable along the shafts 49 and 50 and can be fixed at a variable distance from the retainer 51, so that a desired amount of primary protective coating is left, after the stripping being finished, or so that the entire end of the fiber ribbon is completely stripped.

Furthermore, the tool can, in order to obtain a heating of the fiber ribbon to be stripped, be equipped with a heating device, not shown in Fig. 4. In the tool shown in Fig. 4 the heating is arranged in the segments 47 of the lower part 48, but it is also of course possible to arrange a heating of the segments of the upper part. The heating of these segments is suitably performed in an electrical manner by means of a heating wire or resistance wire. In order to obtain a correct temperature, which can be different for different fibers, either an individual heat or temperature detector is provided for each segment or one common detector for all segments 47.

The output signal of this or these detectors is then used as an input signal to an automatic power controller, which controls the power supplied to the segments. Since different fibers have different optimal stripping temperatures, there is also a possibility to set a number of different predetermined temperatures. Heating wires 57 are indicated in the schematic segments 53 of Fig. 2b, these wires being connected to a controller unit 58 through suitable lines. Also here, a temperature sensor 59 is attached to the outermost segment and it is electrically connected to the power controller 58.

In conclusion a method and a device have been described, which make it possible to easily in one operation strip a cable and in particular optical cables joined to each other to form a fiber ribbon, without risking that the coating will be scraped off. The method is primarily applied in stripping cables, where a piece, which is to be stripped in the shape of a tube, and which is so long that it is impossible to perform this in one single operation by means of conventional technique, in particular when stripping optical multi-fiber ribbons and in particular in stripping the 12-fiber ribbon commonly used in the U.S.A.

## Claims

1. A method of stripping a cable, in particular an optical fiber cable and in particular optical fiber cables joined to each other to form a fiber ribbon, the cable comprising an inner core and at least one coating (9), in particular a protective and/or isolating jacket enclosing the core, wherein the coating is removed in the shape of unbroken pieces or tubes in a longitudinal direction of the cable,
the cable is stripped in one single operation comprising several stages, wherein
edges of blades (7, 27, 33, 35) are applied to the coating in a transverse direction in relation to said longitudinal direction, thereby cutting into the coating, at at least two longitudinally separate locations at different distances from an end of the cable, with first edges being applied at a location most proximate to the end of the cable and second edges being applied at a location the next most proximate to the end of the cable, **characterized in that**
a force is applied to the edges in said longitudinal direction towards the end of the cable, wherein said force acts in a first stage only on the first edges to displace a first piece of coating located between the first edges and the end of the cable a distance towards the eng of the cable, and thereafter in a next stage the force also acts on the second edges to displace a second piece of coating located between the first and second edges in a direction towards the end of the cable, at the same time as the first edges continue to displace the first piece of coating.

2. A method according to claim 1, **characterized by** the further step of stopping to apply the force and thereby the displacement of the pieces of coating after they have moved predetermined distances, so that at least one piece of the coating is left around the stripped cable at a distance from its initial position.

3. A tool for removing coatings, in particular protective and/or isolating jackets, from cables, in particular optical fiber cables and in particular optical fiber cables joined to each other to form a fiber ribbon, the tool comprising:
retaining means (21, 51) for firmly holding a cable at a distance from an end thereof, and
at least two segments (23, 40, 47) carrying blades (7, 27, 33, 35) having edges arranged to cut into the coating (9) of the cable at at least two locations at different distances from an end of the cable between the retaining means and the end, with first edges arranged to be applied at a location most proximate to the end of the cable, and second edges arranged to be applied at a location the next most proximate to the end of the cable, so that the coating can be removed in the shape of unbroken pieces or tubes in a longitudinal direction of the cable, **characterized in that**
the segments are mechanically interconnected and displaceable in said longitudinal direction in relation to each other and to the retaining means, wherein the segments are arranged such that, when a force is applied to the segments in the longitudinal direction towards the end of the cable:
a first segment carrying said first edges is displaced in a first stage so that a first piece of coating located between the first edges and the end is displaced a distance towards the end of the cable, and
a second segment carrying said second edges is displaced in a next stage so that a second piece of coating located between the first and second edges is displaced in a direction towards the end of the cable, at the same time as the first piece of coating is further displaced towards the end.

4. A tool according to claim 3, **characterized in that** the segments have means, which in the removal of the coating form a stop for a movement of a segment in relation to an adjacent segment more than a predetermined distance.

5. A tool according to claim 3 or 4, **characterized by** means for heating a cable to be stripped.

6. A tool according to claim 5, **characterized in that** the heating means comprise electrical coils (57) in the segments of the tool, wherein a power controller (58) is arranged to automatically control the heat emitted therefrom to a predetermined temperature based on the output signal from one or several temperature sensing means (59).

7. A tool according to any of claims 3 - 6, **characterized by** a main body having a side surface and a linear bearing extending from the side surface, wherein the segments are individually moveable in a restricted manner along the linear bearing.

8. A tool according to claim 7, **characterized in that** the linear bearing comprises parallel shafts (49, 50) extending from the side surface.

9. A tool according to claim 7 or 8, **characterized by** a stop (52), which prevents that all subsections of the stripped coating are entirely removed from the end of the cable.

10. A tool according to claim 9, **characterized in that** the stop is displaceable and can be fixed at an arbitrary position along the linear bearing, so that the segments are located between the main body and the stop.

11. A tool according to any of claims 7 - 10, **characterized in that** the segments are comprised in segment pairs and that one of the segments of a segment pair is arranged to be rotated about a shaft (49) being part of the linear bearing, whereby it is possible to separate the segments of a pair by rotating one segment about the shaft.

12. A tool according to claim 11, **characterized in that** the segments of a segment pair comprise a male part and a female part arranged to come into engagement with each other for locking the male and female parts to each other in a direction parallel to the linear bearing.

13. A tool according to any of claims 3 - 12, **characterized by** engagement means (37, 39, 42) attached in the first segment being located closest to the cable end, which is arranged to come into engagement with the second segment, being adjacent to the first segment, so that this engagement is obtained when the first segment has been displaced during the first stage a predetermined distance from the second segment, enabling the second segment to be displaced during the next stage.

14. A tool according to claim 13, **characterized in that** the engagement means comprises an elongated element (42), which is attached to the first segment and extends in the longitudinal direction and carries projections (43), which are arranged to cooperate with stop surfaces of the other segments, so that a projection does not come into contact with a stop surface on a considered other segment, until the nearest adjacent segment has been displaced a predetermined distance towards the end of the cable.

15. A tool according to claim 13 or 14 in combination with claim 11 or 12, **characterized in that** the engagement means is arranged on an upper first segment being closest to the cable end, and extends so that, when this upper segment is swung up around the shaft, other upper segments are forced to follow this movement, by the engagement means projecting from the first segment and extending along the under side of the other segments.

16. A tool according to claim 11 or 12, **characterized in that** an upper first segment being closest to the cable end is attached to an upper part (44), which is located above all segments.

17. A tool according to any of claims 3 - 16, **characterized in that** the segments in their middle part have a recess (41') comprising side surfaces for aligning laterally a cable placed in the tool.

## Patentansprüche

1. Verfahren zum Abisolieren eines Kabels, insbesondere eines Lichtleiter-Kabels und insbesondere von Lichtleiter-Kabeln, die miteinander verbunden sind, um ein Lichtleiter-Band zu bilden, welches Kabel einen inneren Kern aufweist und zumindest eine Beschichtung (9), insbesondere eine schützende und/oder isolierende Ummantelung, die den Kern umschließt,
wobei die Beschichtung in Gestalt von unversehrten Stücken oder Röhrchen in einer Längsrichtung des Kabels entfernt wird und das Kabel in einem einzigen Vorgang mit mehreren Schritten abisoliert wird,
worin Kanten einer Schneide (7, 27, 33, 35) auf die Beschichtung in einer Querrichtung bezüglich der Längsrichtung aufgebracht werden und so in die Beschichtung hineinschneiden, und zwar an zumindest zwei längs beabstandeten Stellen in unterschiedlichen Abständen von einem Ende des Kabels, wobei erste Kanten an einer Stelle aufgebracht werden, die dem Ende des Kabels am nächsten ist, und zweite Kanten an einer Stelle, die dem Ende des Kabels am zweitnächsten ist,
**dadurch gekennzeichnet, dass** eine Kraft auf die Kanten in der Längsrichtung in Richtung des Endes des Kabels aufgebracht wird, welche Kraft in einem ersten Schritt nur auf die ersten Kanten einwirkt, um ein erstes Stück der Beschichtung zwischen den ersten Kanten und dem Ende des Kabels um eine bestimmte Strecke in Richtung des Endes zu verschieben, und die Kraft anschließend in einem nächsten Schritt auch auf die zweiten Kanten einwirkt, um ein zweites Stück der Beschichtung zwischen den ersten und den zweiten Kanten in Richtung des Endes des Kabels zu verschieben, während die ersten Kanten noch das erste Stück der Beschichtung verschieben.

2. Verfahren nach Anspruch 1, **dadurch gekennzeichnet, dass** außerdem das Aufbringen der Kraft gestoppt wird und dadurch die Verschiebung der Beschichtungsstücke angehalten wird, nachdem diese sich um vorbestimmte Strecken bewegt haben, so dass zumindest ein Stück der Beschichtung um das abisolierte Kabel in einem Abstand von seiner anfänglichen Position verbleibt.

3. Werkzeug zum Entfernen von Beschichtungen, insbesondere schützenden und/oder isolierenden Ummantelungen, von Kabeln, insbesondere von Lichtleiter-Kabeln und insbesondere von solchen Lichtleiter-Kabeln, die miteinander verbunden sind, um ein Lichtleiter-Band zu bilden, welches Werkzeug folgendes aufweist:
Rückhaltemittel (21, 51) zum Festhalten eines Kabels in einem Abstand von einem Ende des Kabels, und
zumindest zwei Segmente (23, 40, 47) mit Schneiden (7, 27, 33, 35) mit Kanten zum Schneiden in die Beschichtung (9) des Kabels an zumindest zwei Stellen in verschiedenen Abständen von einem Ende des Kabels zwischen den Rückhaltemitteln und dem Ende, wobei erste Kanten an einer Stelle aufbringbar sind, die dem Ende des Kabels am nächsten ist, und zweite Kanten an einer Stelle, die dem Ende des Kabels am zweitnächsten ist, so dass die Beschichtung in Gestalt von unversehrten Stücken oder Röhrchen in Längsrichtung des Kabels entfernbar ist,
**dadurch gekennzeichnet, dass**
die Segmente mechanisch miteinander verbunden sind und in der Längsrichtung bezüglich einander verschiebbar sind und bezüglich der Rückhaltemittel, wobei die Segmente so angeordnet sind, dass, wenn eine Kraft auf die Segmente in der Längsrichtung in Richtung des Endes des Kabels aufgebracht wird:
ein erstes Segment mit den ersten Kanten in einem ersten Schritt verschoben wird, so dass ein erstes Stück der Beschichtung zwischen den ersten Kanten und dem Ende um eine bestimmte Strecke in Richtung des Endes verschoben wird, und
ein zweites Segment mit den zweiten Kanten in einem nächsten Schritt so verschoben wird, dass ein zweites Stück der Beschichtung zwischen den ersten und den zweiten Kanten in Richtung des Endes des Kabels verschoben wird, während das erste Stück der Beschichtung weiter in Richtung des Endes des Kabels verschoben wird.

4. Werkzeug nach Anspruch 3, **dadurch gekennzeichnet, dass** die Segmente Mittel haben, die bei dem Entfernen der Beschichtung einen Anschlag für eine Bewegung eines Segments mit Bezug auf ein benachbartes Segment um mehr als einen vorbestimmten Abstand bilden.

5. Werkzeug nach Anspruch 3 oder 4, **gekennzeichnet durch** Mittel zum Erhitzen eines abzuisolierenden Kabels.

6. Werkzeug nach Anspruch 5, **dadurch gekennzeichnet, dass** die Heizmittel elektrische Spulen (57) in den Segmenten des Werkzeugs aufweisen, wobei eine Energiesteuerung (58) dazu vorgesehen ist, die von dort emittierte Hitze auf der Basis des von zumindest einem Temperatursensor (59) ausgegebenen Signals auf eine vorbestimmte Temperatur zu steuern.

7. Werkzeug nach einem der Ansprüche 3 bis 6, **gekennzeichnet durch** einen Hauptkörper mit einer Seitenfläche und einem sich von der Seitenfläche aus erstreckenden Linearlager, worin die Segmente individuell in beschränkter Art und Weise entlang des Linearlagers beweglich sind.

8. Werkzeug nach Anspruch 7, **dadurch gekennzeichnet, dass** das Linearlager parallele Wellen (49, 50) aufweist, die sich von der Seitenfläche aus erstrecken.

9. Werkzeug nach Anspruch 7 oder 8, **gekennzeichnet durch** einen Anschlag (52), der verhindert, dass alle Unter-Abschnitte der abgelösten Beschichtung vollständig von dem Ende des Kabels entfernt werden.

10. Werkzeug nach Anspruch 9, **dadurch gekennzeichnet, dass** der Anschlag verschiebbar ist und in einer beliebigen Position entlang des Linearlagers befestigt werden kann, so dass sich die Segmente zwischen dem Hauptkörper und dem Anschlag befinden.

11. Werkzeug nach einem der Ansprüche 7 bis 10, **dadurch gekennzeichnet, dass** die Segmente in Paaren vorhanden sind und dass eines der Segmente eines Paares drehbar um eine Welle (49) angeordnet ist, die Teil des Linearlagers ist, während es möglich ist, die Segmente eines Paares durch Drehen eines Segments um die Welle herum zu trennen.

12. Werkzeug nach Anspruch 11, **dadurch gekennzeichnet, dass** die Segmente eines Paares einen aufzunehmenden und einen aufnehmenden Teil aufweisen, die miteinander in Kontakt geraten können, um sie miteinander zu verriegeln, und zwar in einer Richtung parallel zu dem Linearlager.

13. Werkzeug nach einem der Ansprüche 3 bis 12, **gekennzeichnet durch** Eingriffsmittel (37, 39, 42), die in dem ersten Segment angebracht sind, das dem Ende des Kabels am nächsten ist und das mit dem zweiten Segment in Eingriff geraten kann, das dem ersten Segment benachbart ist, so dass dieser Eingriff erzielt wird, wenn das erste Segment während des ersten Schritts um einen vorbestimmten Abstand von dem zweiten Segment aus verschoben worden ist, so dass das zweite Segment während des nächsten Schritts verschoben werden kann.

14. Werkzeug nach Anspruch 13, **dadurch gekennzeichnet, dass** die Eingriffsmittel ein längliches Element (42) aufweisen, das an dem ersten Segment angebracht ist und sich in der Längsrichtung erstreckt und Vorsprünge (43) trägt, die mit Anschlagflächen der anderen Segmente zusammenwirken können, so dass ein Vorsprung nicht in Kontakt mit einer Anschlagfläche an einem betrachteten anderen Segment gerät, bevor das nächste benachbarte Segment um einen vorbestimmten Abstand in Richtung des Endes des Kabels verschoben worden ist.

15. Werkzeug nach Anspruch 13 oder 14 in Kombination mit Anspruch 11 oder 12, **dadurch gekennzeichnet, dass** die Eingriffsmittel an einem oberen ersten Segment angeordnet sind, das dem Ende des Kabels am nächsten ist, und sich so erstreckt, dass, wenn dieses obere Segment um die Welle herum aufwärts verschwenkt wird, andere obere Segmente dazu gezwungen werden, dieser Bewegung zu folgen, und zwar durch die Eingriffsmittel, die von dem ersten Segment hervorstehen und sich entlang der Unterseite der anderen Segmente erstrecken.

16. Werkzeug nach Anspruch 11 oder 12, **dadurch gekennzeichnet, dass** ein oberes erstes Segment, das dem Kabelende am nächsten ist, an einem oberen Element (44) angebracht ist, das sich oberhalb aller Segmente befindet.

17. Werkzeug nach einem der Ansprüche 3- bis 16, **dadurch gekennzeichnet, dass** die Segmente in ihrem mittleren Bereich eine Ausnehmung (41') mit Seitenflächen zum seitlichen Ausrichten eines in dem Werkzeug platzierten Kabels haben.

## Revendications

1. Procédé de dénudage d'un câble, en particulier d'un câble à fibre optique et, notamment, de câbles à fibre optique reliés les uns aux autres pour former un ruban de fibre, le câble comprenant une âme interne et au moins un revêtement (9), en particulier une gaine de protection et/ou isolante enfermant l'âme, dans lequel le revêtement est retiré sous la forme de morceaux ou tubes non cassés dans la direction longitudinale du câble;
le câble est dénudé en une seule opération comportant plusieurs stades, dans lesquels:
des arêtes de lames (7, 27, 33, 35) sont appliquées sur le revêtement dans une direction transversale par rapport à ladite direction longitudinale, incisant ainsi le revêtement, à au moins deux endroits séparés longitudinalement situés à des distances différentes d'une extrémité du câble, de premières arêtes étant appliquées à un endroit le plus proche de l'extrémité du câble et de secondes arêtes étant appliquées à un endroit suivant immédiatement l'endroit le plus proche de l'extrémité du câble, **caractérisé en ce que**:
une force est appliquée aux arêtes dans ladite direction longitudinale vers l'extrémité du câble, ladite force agissant, lors d'une première étape, uniquement sur les premières arêtes pour déplacer un premier morceau de revêtement, situé entre les premières arêtes et l'extrémité du câble, d'une certaine distance vers l'extrémité du câble et, ensuite, lors d'une étape suivante, la force agit également sur les secondes arêtes pour déplacer un second morceau de revêtement, situé entre les premières et secondes arêtes dans une direction allant vers l'extrémité du câble, en même temps que les premières arêtes continuent de déplacer le premier morceau de revêtement.

2. Procédé selon la revendication 1, **caractérisé par** une autre étape consistant à mettre fin à l'application de la force et, ainsi, au déplacement des morceaux de revêtement une fois que ces derniers se sont déplacés de certaines distances prédéterminées, de sorte qu'au moins un morceau du revêtement soit laissé autour du câble dénudé à une certaine distance de sa position initiale.

3. Outil pour retirer des revêtements, en particulier des gaines de protection et/ou isolantes, de câbles, en particulier de câbles à fibre optique, et notamment de câbles à fibre optiques reliés les uns aux autres pour former un ruban de fibre, l'outil comportant:
des moyens de retenue (21, 51) pour maintenir fermement un câble à une certaine distance d'une extrémité de celui-ci; et
au moins deux segments (23, 40, 47) portant des lames (7, 27, 33, 35) ayant des arêtes agencées pour inciser le revêtement (9) du câble à au moins deux endroits situés à des distances différentes d'une extrémité du câble, entre les moyens de retenue et l'extrémité, de premières arêtes étant agencées pour être appliquées à un endroit situé le plus près de l'extrémité du câble, et de secondes arêtes étant agencées pour être appliquées à un endroit suivant immédiatement l'endroit le plus proche de l'extrémité du câble, de sorte que le revêtement puisse être retiré sous la forme de morceaux ou tubes non cassés dans une direction longitudinale du câble, **caractérisé en ce que**:
les segments sont interconnectés mécaniquement et déplaçables dans ladite direction longitudinale les uns par rapport aux autres, et aux moyens de retenue, les segments étant agencés de telle sorte que, lorsqu'une force est appliquée aux segments dans la direction longitudinale vers l'extrémité du câble:
un premier segment portant lesdites premières arêtes est déplacé, lors d'une première étape, de sorte qu'un premier morceau de revêtement, situé entre les premières arêtes et l'extrémité, soit déplacé d'une certaine distance vers l'extrémité du câble; et
un second segment portant lesdites secondes arêtes est déplacé, lors d'une étape suivante, de sorte qu'un second morceau de revêtement, situé entre les premières et secondes arêtes, soit déplacé dans une direction allant vers l'extrémité du câble, en même temps que le premier morceau de revêtement est déplacé davantage vers l'extrémité.

4. Outil selon la revendication 3, **caractérisé en ce que** les segments comportent des moyens qui, lors du retrait du revêtement, forment une butée empêchant le déplacement d'un segment par rapport à un segment adjacent de plus d'une distance prédéterminée.

5. Outil selon la revendication 3 ou 4, **caractérisé par** des moyens pour chauffer un câble à dénuder.

6. Outil selon la revendication 5, **caractérisé en ce que** les moyens de chauffage comportent des bobines électriques (57) dans les segments de l'outil, un régulateur de puissance (58) étant agencé pour réguler automatiquement la chaleur émise par celles-ci selon une température prédéterminée sur la base du signal de sortie provenant d'un ou de plusieurs moyens de détection de température (59).

7. Outil selon l'une quelconque des revendications 3 à 6, **caractérisé en ce qu'**un corps principal a une surface latérale et un palier linéaire s'étendant à partir de la surface latérale, les segments étant déplaçables individuellement de façon restreinte le long du palier linéaire.

8. Outil selon la revendication 7, **caractérisé en ce que** le palier linéaire comporte des arbres parallèles (49, 50) s'étendant à partir de la surface latérale.

9. Outil selon la revendication 7 ou 8, **caractérisé par** une butée (52) qui empêche le retrait complet de l'extrémité du câble de toutes les subdivisions du revêtement enlevé.

10. Outil selon la revendication 9, **caractérisé en ce que** la butée est déplaçable et peut être fixée à une position arbitraire le long du roulement linéaire, de sorte que les segments se situent entre le corps principal et la butée.

11. Outil selon l'une quelconque des revendications 7 à 10, **caractérisé en ce que** les segments sont constitués de paires de segments et **en ce que** l'un des segments d'une paire de segments est agencé pour être entraîné en rotation autour d'un arbre (49) formant partie du palier linéaire, les segments d'une paire pouvant être séparés en faisant tourner un segment autour de l'arbre.

12. Outil selon la revendication 11, **caractérisé en ce que** les segments d'une paire de segments comportent une partie mâle et une partie femelle agencés de façon à s'engager l'une avec l'autre pour verrouiller l'une à l'autre les parties mâle et femelle dans une direction parallèle au palier linéaire.

13. Outil selon l'une quelconque des revendications 3 à 12, **caractérisé par** un moyen d'engagement (37, 39, 42) attaché dans le premier segment, qui est situé le plus près de l'extrémité du câble, qui est agencé pour s'engager avec le second segment, qui est adjacent au premier segment, de sorte que cet engagement soit obtenu lorsque le premier segment a été déplacé, pendant la première étape, du second segment d'une distance prédéterminée, ce qui permet au second segment d'être déplacé pendant l'étape suivante.

14. Outil selon la revendication 13, **caractérisé en ce que** le moyen d'engagement comporte un élément allongé (42), qui est attaché au premier segment et qui s'étend dans la direction longitudinale et porte des saillies (43), qui sont agencées de façon à coopérer avec des surfaces de butée des autres segments, de sorte qu'une saillie ne vienne pas au contact d'une surface de butée se trouvant sur un autre segment donné avant que le segment adjacent le plus proche n'ait été déplacé d'une distance prédéterminée vers l'extrémité du câble.

15. Outil selon la revendication 13 ou 14 en combinaison avec la revendication 11 ou 12, **caractérisé en ce que** le moyen d'engagement est disposé sur un premier segment supérieur situé le plus près de l'extrémité du câble, et s'étend de telle sorte que, lorsque ce premier segment est amené à basculer vers le haut autour de l'arbre, d'autres segments supérieurs sont contraints de suivre ce mouvement, par le moyen d'engagement faisant saillie à partir du premier segment et s'étendant le long du côté inférieur des autres segments.

16. Outil selon la revendication 11 ou 12, **caractérisé en ce qu'**un premier segment supérieur situé le plus près de l'extrémité du câble est attaché à une partie supérieure (44) qui se situe au-dessus de tous les segments.

17. Outil selon l'une quelconque des revendications 3 à 16, **caractérisé en ce que** les segments sont dotés, dans leur partie centrale, d'un évidement (41') comportant des surfaces latérales pour aligner latéralement un câble placé dans l'outil.
